# EUROPEAN PATENT APPLICATION

(11) **EP 4 174 685 A1**
(43) Date of publication of application: **03.05.2023**
(21) Application number: 21834451.3
(22) Date of filing: 28.06.2021
(51) Int. Cl.: G06F 16/958

(54) **MODEL-DRIVEN METHOD AND APPARATUS FOR INTELLIGENT OPERATION AND MAINTENANCE MIDDLEGROUND PORTAL**

(30) Priority: 28.06.2020 CN 202010598856
(71) Applicant: ZTE Corporation, Shenzhen, Guangdong 518057 (CN)
(72) Inventor: FU, Yingchun, Shenzhen, Guangdong 518057 (CN); XU, Daigang, Shenzhen, Guangdong 518057 (CN); MENG, Zhaoxing, Shenzhen, Guangdong 518057 (CN); SHEN, Shanhong, Shenzhen, Guangdong 518057 (CN)
(74) Representative: Petraz, Gilberto Luigi
(86) International application number: PCT/CN2021/102839
(87) International publication number: WO 2022/001982

(57) **Abstract**

A model-driven method and apparatus for an intelligent operation and maintenance middleground portal. The method comprises: each service component of an intelligent operation and maintenance middleground constructing a contact model file of each scenario according to a contact model specification (S101); a contact capability management module storing the contact model file of each scenario according to a specification of one scenario in one directory (S102); and after a contact model analyzer scans and analyzes, according to a scenario value of a set scenario, contact model files that are available for matching, the contact capability management module collecting contact model data from matched contact model files, and aggregating the collected contact model data according to the scenario, so as to provide a middleground portal according to the scenario by means of binding a middleground user with the scenario (S103).

## Description

This application claims the priority of Chinese patent application CN 202010598856.9, entitled "Model-driven Method and Apparatus for Intelligent Operation and Maintenance Middleground Portal" and filed on June 28, 2020, the entirety of which is incorporated herein by reference.

### Field of the Invention

The present disclosure relates to the technical field of communications, and in particular, to a model-driven method for an intelligent operation and maintenance middleground portal and a model-driven apparatus for the same.

### Background of the Invention

In the field of telecommunications, with the gradual advancement of Software Defined Network (SDN)/ Network Function Virtualization (NFV) architecture and the accelerated development of 5G network cloud based reconfiguration and Multi-access/Mobile Edge Computing (MEC) innovation, there are an increasing variety of application scenarios of multi-cloud access, cloud-network convergence, cloud-edge synergy. In order to adapt to rapid and complicated changes of network requirements and services, telecom operators and communication device providers successively propose middleground construction. The traditional single-profession management mode transforms to integrated management and centralized management, and the technical architecture changes from traditional single application to a form of cloud-based, micro-service-based, or middleground-based. The middleground technology is an inevitable trend in 5G intelligent operation and maintenance. The middleground usually includes service middleground, data middleground, AI middleground, technology middleground, and the like. In the 5G intelligent operation and maintenance, by integrating respective isolated service domains and integrating network management capabilities of 5G core network/VoLTE, wireless network, bearer network, DC, Big Data, AI, and the like, chimney-like construction of respective professions can be broken. As such, a set of new 5G intelligent network management capabilities has been established by using the middleground so that reconfiguration of the 5G intelligent operation and maintenance can be completed, thereby achieving capability sharing, getting through data and capability barriers, and shortening the time cycle for launching a new service.

In the traditional single-profession management mode, an operation and maintenance system is usually deployed independently according to its profession. For example, systems are deployed separately according to the core network, the bearer network, the wireless network, and the like, in which their operation and maintenance portals are independent from each other, service functions are different from one another, and operation and maintenance interfaces are also independent from each other. However, the 5G intelligent operation and maintenance based on the middleground covers a plurality of systems of different domains, aggregates a great number of service functions, and forms a great number of foreground applications. Meanwhile, the foreground faces more groups of end-users which are more complicated. Different operators have different requirements for displaying the foreground applications. In particular, difference in organizational architectures among different operators leads to difference among the service management modes. Within one operator, scenarios are also divided in terms of posts and responsibilities of operation and maintenance workers, so as to provide different service functions according to the scenarios. For example, the 5G intelligent operation and maintenance portal can be divided, in terms of operators, into China Mobile, China Telecom, China Unicom, and the like; and within the operator, scenarios can be divided into slice, sub-slice, 5G, 4G, core network, bearer network, wireless network, network operations center (NOC), network data analysis, and the like.

With respect to the requirement that the 5G intelligent operation and maintenance middleground portal provides different services according to the scenarios, a conventional practice manner is that a manufacturer customizes to develop new portals according to individualized requirements of the operators, and new versions are released after the customization to satisfy differentiated requirements of the operators. Due to this manner, a great number of portal entities appear, which involve lots of computing resources, and login addresses of different portals cannot be unified. As a result, a longer development period is resulted, the cost is higher, and the flexibility is very poor, in particular, in the case that the 5G intelligent operation and maintenance middleground has aggregated a great number of systems and has even also involved multiple manufactures. If the manner of customizing to develop the portals as demands is still used, there would be a great difficulty, and the existing method cannot meet the needs.

### Summary of the Invention

The present disclosure aims to provide a model-driven method for an intelligent operation and maintenance middleground portal and a model-driven apparatus for the same, which are configured to rapidly construct foreground applications with respect to respective scenarios so as to meet display requirements of different end-user groups for the portal, unify portal addresses, save computing resources of the portal, and quickly adapt to the display requirements of different end-users for the portal in a middleground architecture.

According to a first aspect of the present disclosure, a model-driven method for an intelligent operation and maintenance middleground portal is provided, which includes steps of:
constructing, by each of service components in an intelligent operation and maintenance middleground, contact model files with respect to respective scenarios according to a contact model specification;
storing, by a contact capability management module, the contact model files with respect to respective scenarios according to a specification that one scenario involves one directory; and
scanning and analyzing at a contact model analyzer, by the contact capability management module, contact model files that are matched according to a scenario value of a set scenario, collecting data of contact models from the contact model files that are matched, and aggregating, in terms of scenarios, the data of contact models, so as to provide a middleground portal in terms of scenarios by binding a middleground user with a scenario.

Preferably, the above method of the present disclosure further includes a step of performing lifecycle management on the contact models after aggregating the collected data of contact models in terms of scenarios, which specifically includes steps of:
forming, by the contact capability management module, contact models by aggregating, in terms of scenarios, the collected data of contact models; and
maintaining, by the contact capability management module, lifecycles of the contact models in real time according to lifecycles of respective service components in the intelligent operation and maintenance middleground.

Preferably, each of the service components is an application program which provides a complete service with respect to a certain function and is deployed independently; the middleground portal provides a unified login entry, and a service function in the portal is formed by a series of contacts and is exhibited in terms of application scenarios; and each of the contacts is a function entry for a user in the middleground portal to operate.

Preferably, each of the contact model files includes: a contact ID, a contact name, a contact response *herf*, a contact connection relationship *parent ID,* and a sequence number *order.*

Preferably, scanning and analyzing at a contact model analyzer contact model files that are matched according to a scenario value of a set scenario includes steps of:
activating, by each of the service components, a contact model scanner upon monitoring a scenario notification carrying a scenario value and broadcasted by message middleware; and
scanning, by the contact model scanner, the contact model files according to the scenario value, and analyzing the contact model files that are matched so as to obtain data of contact models.

Preferably, to provide a middleground portal in terms of scenarios by binding a middleground user with a scenario includes steps of:
binding each middleground user with a related usage scenario according to a working responsibility of the middleground user and its related usage scenario;
acquiring, by a portal service module, data of contact models matching the scenario according to a binding relationship between the middleground user and the scenario when the user accesses the middleground portal; and
instantiating, by a portal service module after acquiring the data of contact models, contacts according to the contact models and displaying the contacts in the portal.

Preferably, binding each middleground user with a related usage scenario includes a step of setting a scenario tag of the related usage scenario for each middleground user.

Preferably, acquiring, by a portal service module, data of contact models matching the scenario according to a binding relationship between the middleground user and the scenario when the user accesses the middleground portal includes steps of:
inquiring, by the middleground user after logging into the middleground portal, the contact capability management module about the contact models by using the scenario tag; and
instantiating, in terms of scenarios by the contact capability management module, a portal according to all data of contact models obtained by inquiring, and displaying service functions belonging to the middleground user.

According to a second aspect of the present disclosure, a model-driven apparatus for an intelligent operation and maintenance middleground portal is provided, which includes:
service components of an intelligent operation and maintenance middleground, each of which is configured to construct contact model files with respect to respective scenarios according to a contact model specification;
a contact model analyzer, which is configured to scan and analyze, according to a scenario value of a set scenario, contact model files that are matched; and
a contact capability management module, which is configured to store the contact model files with respect to respective scenarios according to a specification that one scenario involves one directory, and is configured to collect, after the contact model analyzer scans and analyzes the contact model files that are matched according to the scenario value of the set scenario, data of contact models from the matched contact model files and aggregate, in terms of scenarios, the collected data of contact models, so as to provide a middleground portal in terms of scenarios by binding a middleground user with a scenario.

The model-driven apparatus for an intelligent operation and maintenance middleground portal according to the present disclosure further includes: a user management module, which is configured to bind a middleground user with a scenario; and a portal service module, which is configured to acquire the data of contact models in response to a user login request, and perform instantiation according to description of the contact models so as to provide the middleground portal in terms of the scenario.

Compared with existing technologies, the present disclosure has the following beneficial effects: (1) a model is formed by abstracting a contact in the portal and is standardized to serve as a standard output element of a component in a middleground system; (2) through model-driving, scenarios are subjected to modeling, the models therein are dynamic and are ready to run upon use; (3) profession scenarios are designed according to operation and maintenance requirements, and corresponding operation and maintenance functions are enumerated in terms of profession scenarios, based on which modeling is performed to solve the problem of having multiple models for multiple scenarios; and (4) portal service is implemented as a framework, and one unique portal frame can display different service function combinations according to scenario tags of different users, so as to unify the entry and save the computing resources.

The present disclosure is described in detail below with reference to the accompanying drawings.

### Brief Description of the Drawings

Fig. 1A is a schematic diagram of a model-driven method for an intelligent operation and maintenance middleground portal according to an embodiment of the present disclosure;
Fig. 1B is a schematic diagram of a model-driven apparatus for an intelligent operation and maintenance middleground portal according to an embodiment of the present disclosure;
Fig. 2 is a schematic diagram of layers of a 5G intelligent operation and maintenance architecture as well as foreground applications;
Fig. 3 is a schematic diagram of a foreground and a background of the 5G intelligent operation and maintenance architecture;
Fig. 4 schematically shows a middleground portal according to an embodiment of the present disclosure which is exhibited in terms of operation and maintenance scenarios;
Fig. 5 is a schematic diagram of a correspondence relationship between a scenario name and a contact model in a component according to an embodiment of the present disclosure;
Fig. 6 is a flowchart of data processing according to an embodiment of the present disclosure;
Fig. 7 is a schematic diagram of a process for binding a middleground user with a scenario according to an embodiment of the present disclosure; and
Fig. 8 is a flowchart of an instance of a middleground portal according to an embodiment of the present disclosure.

### Detailed Description of the Embodiments

For the convenience of description, concepts involved in the present disclosure and relevant contents are described as below.

A portal is formed by a series of function points available for the user to operate, and each function point entry is called an application contact. In the present disclosure, an application contact is abstracted as a contact model, and then the contact model is subjected to standardization, so that dynamization of the portal is enabled by model-driving.

A component is an application program which provides a complete service with respect to a certain function and is deployed independently.

A component pool is a component collection of a series of independent components.

A product combination is a specific product combined by selecting related components from the component pool according to product requirements.

A foreground application is a combination of operable functions provided to a user by using service components.

An application contact is a service function guide point in a middleground portal.

A middleground portal provides a unified login entry, and each of service functions in the portal is formed by a series of contacts and is exhibited in terms of application scenarios.

Scenario management refers to managing scenarios supported by a system and setting a scenario value for each scenario. Scenarios include, in terms of operators, China Mobile, China Telecom, China Unicom, and the like; in terms of professions, slice, sub-slice, 5G, 4G, core network, bearer network, wireless network, NOC, network data analysis, and the like; and in terms of users, government enterprise user, configuration user, partner, and the like,. Scenarios predetermined in the system are managed. After the system is deployed, setting management is performed in terms of scenarios according to needs.

Contact capability management has functions such as contact model definition, contact model analysis, and contact model lifecycle management.

For the contact model definition, a contact is a function entry for a user to operate, and is defined by a service component. In order to regulate management of contacts, the contact capability management provides a standard description specification of contact model, in which a model format may be *xml*/*json*/*yml*, and model contents include at least a contact ID, a contact response *herf*, a contact connection relationship, a sequence number, and the like. The service component describes a contact model according to the specification stipulated, and describes specific contact models with respect to multiple scenarios. Description of a model as well as attributes in the model may be expanded according to functional needs. A set of corresponding model files are defined with respect to a type of service scenario.

For the contact model analysis, it refers to scanning and analyzing contact models of respective components according to a scenario currently run, aggregating contents of contact files of the entire system by a distributed message middleware technology, and generating complete contact data.

For the contact model lifecycle management, a component involves lifecycles such as adding, uninstalling, start/stop, and the like, so that a contact related to the component also requires synchronous lifecycle management such as adding and deleting.

For contact management, it takes charge of managing data of contact models which has been analyzed and synthesized, making the data of contact models persistent, performing data maintenance in response to change of a lifecycle of a contact, and providing displayable contact data models for the middleground portal.

For portal service, it responds to a login request from a front-end portal. The portal service only has one deployment entity, which is configured to acquire data of the contact models from a contact management capability center and perform instantiation according to description of contact models so that a middleground portal can be provided in terms of service scenarios.

User management refers to binding a mapping relationship between a new user and a scenario tag upon an administrator creates the new user so as to establish a correspondence relationship between the scenario and the user.

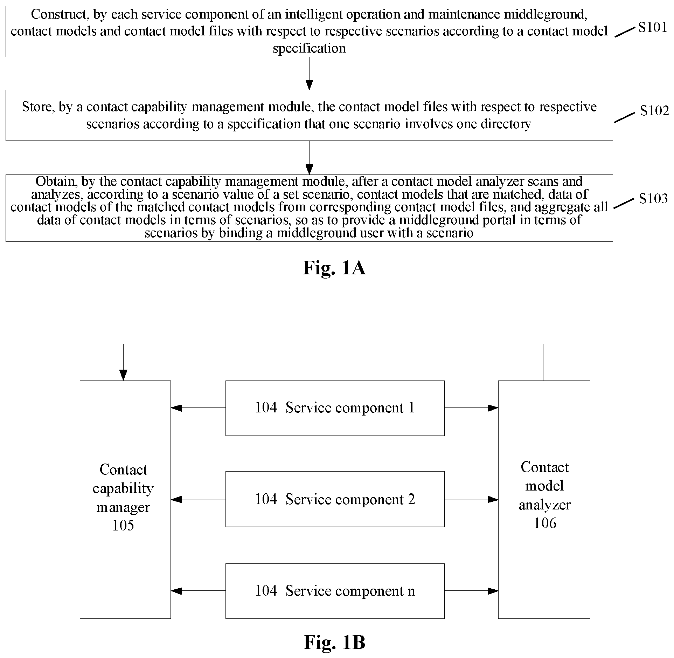

Fig. 1A shows a model-driven method for an intelligent operation and maintenance middleground portal according to an embodiment of the present disclosure. The method according to the present embodiment shown in Fig. 1A includes the following steps. At step S101, each service component of an intelligent operation and maintenance middleground constructs contact model files with respect to respective scenarios according to a contact model specification; at step S102, a contact capability management module 105 stores the contact model files with respect to respective scenarios according to a specification that one scenario involves one directory; and at step S103, after a contact model analyzer 106 scans and analyzes, according to a scenario value of a set scenario, contact model files that are matched, the contact capability management module 105 collects data of contact models from the matched contact model files and aggregates, in terms of scenarios, the collected data of contact models, so that a middleground portal is provided in terms of scenarios by binding a middleground user with a scenario.

The model-driven method for an intelligent operation and maintenance middleground portal according to the present embodiment shown in Fig. 1A further includes a step of performing lifecycle management on the contact models after all data of contact models is aggregated in terms of scenarios. The step specifically includes the following steps.

The contact capability management module 105 forms contact models by aggregating, in terms of scenarios, the collected data of contact models; and
the contact capability management module 105 maintains lifecycles of the contact models in real time according to lifecycles of respective service components 104 in the intelligent operation and maintenance middleground.

Each of the service components in the present embodiment is an application program which provides a complete service with respect to a certain function and is deployed independently. The middleground portal provides a unified login entry, and a service function in the portal is formed by a series of contacts and is exhibited in terms of application scenarios. Each of the contacts is a function entry for a user in the middleground portal to operate.

The contact model file in the present embodiment includes: a contact ID, a contact name, a contact response *herf*, a contact connection relationship *parent ID,* and a sequence number *order.*

In the above method of the present embodiment, upon monitoring a scenario notification carrying a scenario value and broadcasted by message middleware, each service component activates a contact model scanner; and the contact model scanner scans contact model files according to the scenario value, and analyzes the contact models that are matched so as to obtain data of contact models.

In the above method of the present embodiment, the step that a middleground portal is provided in terms of scenarios by binding a middleground user with a scenario includes the following steps. Each middleground user is bound with a related usage scenario according to a working responsibility of the middleground user and its related usage scenario; when the user accesses the middleground portal, a portal service module acquires data of contact models matching the scenario according to a binding relationship between the middleground user and the scenario; and after the portal service module acquires the data of contact models, contacts are instantiated according to the contact models and are exhibited in the portal.

In the above method of the present embodiment, the step that each middleground user is bound with a related usage scenario includes setting a scenario tag of the related usage scenario for each middleground user.

In the above method of the present embodiment, the step that a portal service module acquires data of contact models matching the scenario according to a binding relationship between the middleground user and the scenario includes the following steps. After logging into the middleground portal, the middleground user inquiries the contact capability management module 105 about the contact models by means of the scenario tag; the contact capability management module 105 instantiates, in terms of scenarios, a portal according to all data of contact models obtained by inquiring, and displays service functions belonging to the middleground user.

In a specific instance of the present disclosure, the above method of the present embodiment may be implemented through the following eight steps.

At step 1, scenarios to be supported by a system are planned, and a scenario value is set for each of the scenarios. Scenarios include: in terms of operators, China Mobile, China Telecom, China Unicom, and the like; in terms of professions, slice, sub-slice, 5G, 4G, core network, bearer network, wireless network, NOC, network data analysis, and the like; and in terms of users, government enterprise user, configuration user, partner, and the like. In each of the scenarios, a range of contacts of each scenario and organizational relationships among the contacts are determined.

At step 2, the service components follow a contact model specification, and contact model files of each of the scenarios are designed in conjunction with the scenarios in the above step 1, and are stored according to a specification that one scenario involves one directory.

At step 3, after installation and deployment of the system is completed, the scenarios are arranged as required.

At step 4, after arrangement of the scenarios in step 3 is completed, contact capability management scans and analyzes, by a contact model analyzer, contact models that are matched according to the above scenario value, collects, by the contact capability management module, data of contact models of all components and aggregates, in terms of scenarios, all of the data of contact models, and maintains lifecycle management of the contact models in real time according to lifecycles of the components.

At step 5, a system administrator maintains binding between the user and a scenario.

At step 6, the user accesses the middleground portal.

At step 7, portal service calls an interface of the contact capability management, and acquires matched data of contact models according to a scenario currently run.

At step 8, after the portal service acquires the data of contact models, contacts are instantiated according to the contact models and are exhibited in the portal.

Fig. 1B shows a model-driven apparatus for an intelligent operation and maintenance middleground portal according to an embodiment of the present disclosure. The apparatus includes: service components 104 of an intelligent operation and maintenance middleground, each of which is configured to construct contact model files with respect to respective scenarios according to a contact model specification; a contact model analyzer 106, which is configured to scan and analyze, according to a scenario value of a set scenario, contact model files that are matched; and a contact capability management module 105, which is configured to store the contact model files with respect to respective scenarios according to a specification that one scenario involves one directory, and is configured to, after the contact model analyzer 106 scans and analyzes the contact model files that are matched according to the scenario value of the set scenario, collect data of contact models from the matched contact model files and aggregate, in terms of scenarios, the collected data of contact models, so that a middleground portal is provided in terms of scenarios by binding a middleground user with a scenario.

In addition, the above model-driven apparatus for an intelligent operation and maintenance middleground portal according to the present disclosure further includes: a user management module, which is configured to bind a middleground user with a scenario; and a portal service module, which is configured to acquire the data of contact models in response to a user login request and perform instantiation according to description of the contact models so as to provide the middleground portal in terms of the scenario.

The service components, the contact model analyzer, the contact capability management module, the user management module, the portal service module, and the like of the above intelligent operation and maintenance middleground may be implemented by means of a central processing unit (CPU), a digital signal processor (DSP), or a field programmable gate array (FPGA), etc.

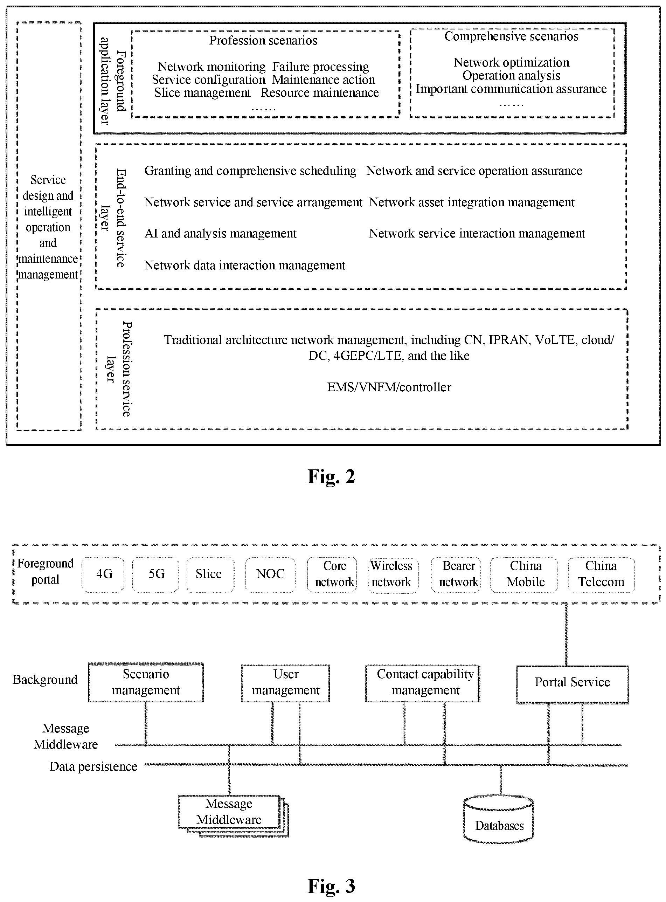

Embodiments of the present disclosure are described in detail by taking 5G for example with reference to Figs. 2 to 8. It should be noted that the embodiments of the present disclosure may also be applied to a mobile communication system subsequent to 5G.

Fig. 2 shows layers of an intelligent operation and maintenance architecture and foreground applications. 5G intelligent operation and maintenance may be divided into three major layers, i.e., a profession service layer, an end-to-end service layer, and a foreground application layer. The intelligent operation and maintenance converges multiple domains and multiple systems to realize integration of service design and intelligent operation and maintenance management, and it integrates respective main service functions at the foreground application layer through the middleground portal so as to provide services for different users.

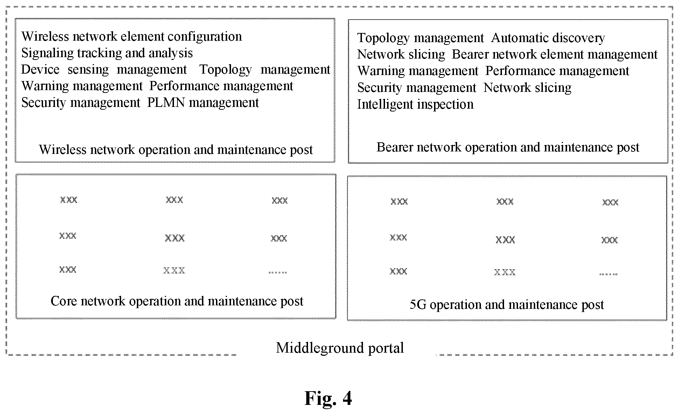

Fig. 3 shows a foreground and a background. A foreground portal may be divided, in terms of operation and maintenance functions, into posts such as slice, sub-slice, 5G, 4G, core network, bearer network, wireless network. Different posts use different service functions, and the different service functions of the different posts are shown in Fig. 4.

A 5G intelligent operation and maintenance middleground involves a great number of service components and service functions. For example, there are components, such as wireless network element configuration, wireless VNF management, signaling tracking analysis, device sensing management, topology management, bearer network element configuration, automatic discovery, network slicing, intention management, intelligent inspection, warning management, performance management, resource analysis, and PLMN, and there are as many as hundreds of function contacts.

Operation and maintenance scenarios of profession posts shown in Fig. 4 are implemented by the following step.

At step 1', scenarios are designed As shown in Fig. 4, a scenario name corresponding to a post of wireless network operation and maintenance is "RAN (radio access network) OAM (operation and maintenance)"; a scenario name corresponding to a post of bearer network operation and maintenance is "BN (bearer network) OAM"; a scenario name corresponding to a post of core network operation and maintenance is "CN (core network) OAM"; and a scenario name corresponding to a post of 5G operation and maintenance is "5G OAM".

A service component designs a contact model for a scenario, which is described as follows.

For a wireless network element configuration component, a contact model file is *ran-ne-cm-touch.json.* For easy understanding, a model code fragment is shown as follows.

| |
|---|
| ```
    [{"id": "ran-ne-cm", // a contact ID
    "en_name": "RAN NE CM", // an internationalized English name of the contact
    "zh_name": "wireless network element configuration", // an internationalized
      Chinese name of the contact
    "href": "/ran-ne/cm.html", // a page link corresponding to the contact
    "parentId":" ", // if it does not exist or is empty, the contact is of a first-level
    "operation": "ran-ne-cm-query", //a corresponding authority ID
    "order": "1", //non-mandatory, it is a sequence number, sequence numbers in the
        same menu level is ranked according to a sequential order, and if it does not
       exist or is empty, it has a lowest priority, its value has a range of integers:
       -2^31 to 2^31 - 1}]
``` |

Contents of the contact model include a contact ID, a contact name, a contact response *herf,* a contact connection relationship *parent ID,* and a sequence number *order.*

For a wireless VNF management component, a contact model file is *ran-vnf-mgt-touch.json*, and model codes are similar to the illustration above.

For an automatic discovery component, a contact model file is *ne-discover-touch.json*, and model codes are similar to the illustration above.

The same service component can describe different contact models with respect to different service scenarios. For example, a warning management component may be mounted at different positions under a wireless network scenario, a bearer network scenario, and a core network scenario, respectively, and examples are as follows.

Under the wireless network scenario, it is a contact model file *fm-ran-touch.json*:

| |
|---|
| ```
      [{"id": "fm-mgt", // a contact ID
     ......
      "parentId": "Network Intelligence Automation", //under the wireless network, it
      is mounted under Network Intelligence Automation
     ......
     }]
``` |

Under the bearer network scenario, it is a contact model file *fm-bn-touch.json*:

| |
|---|
| ```
      [{"id": "fm-mgt", //a contact ID
      ......
      "parentId": "Assurance", //under the bearer network, it is mounted under
      Assurance
     ......
     }]
``` |

Under the core network scenario, it is a contact model file *fm-cn-touch.json*:

| |
|---|
| ```
      [{"id": "fm-mgt", // a contact ID
      ......
      "parentId": "Monitor", //under the core network, it is mounted under Monitor
     ......
     }]
``` |

Specifically, it should be noted that, when the same function is mounted at different positions under different scenarios, it is only required in each case to describe a different parent node *parentID* in the description of the model, so as to flexibly define a parent-child mounting relationship.

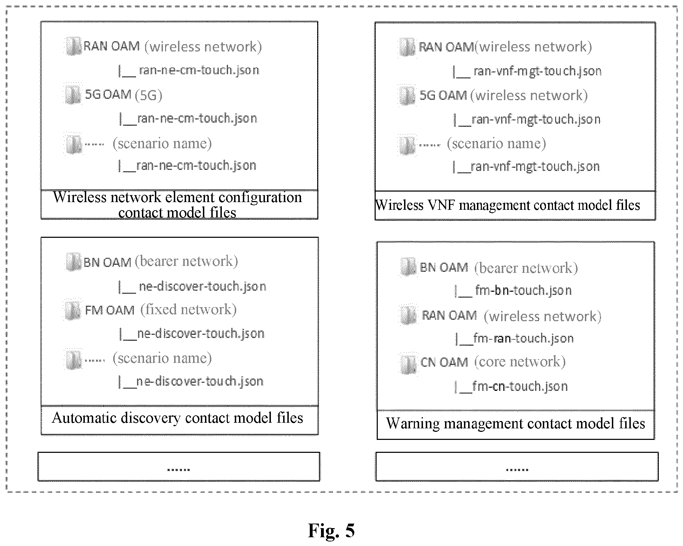

After the contact models of the service component are completed, the contact models are stored according to a specification that one scenario involves one directory of one model, which is shown in Fig. 5.

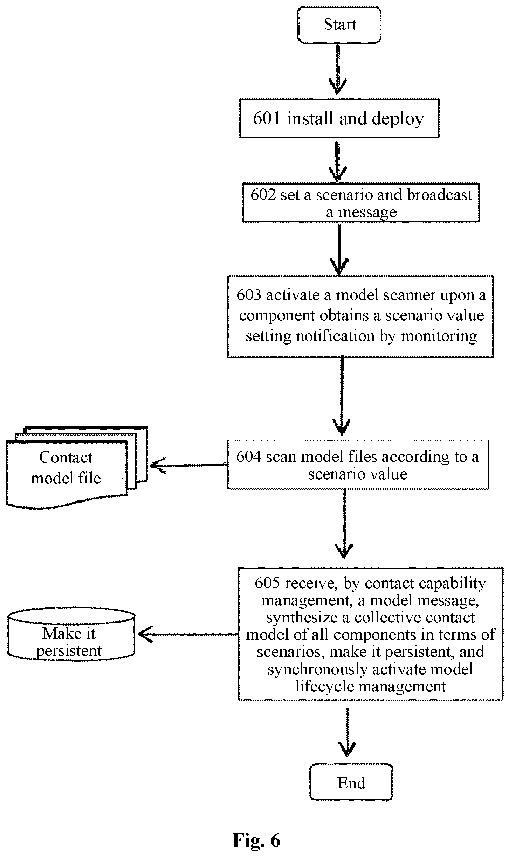

Fig. 6 shows a flowchart of data processing involved in an embodiment of the present disclosure.

At step 601, product installation and deployment are performed.

At step 602, a scenario value is set according to an actual scenario, and is broadcast through middleware in a form of message. For example, the setting needs to support three profession scenarios, i.e., RAN OAM, CN OAM, and BN OAM.

At step 603, a component obtains a scenario notification by monitoring, and activates a model scanner. As shown in Fig. 5, a warning component is taken as an example, in which a contact model file *fm-ran-touch.json* is scanned in terms of a scenario name RAN OAM; a contact model file *fm-bn-touch.json* is scanned in terms of a scenario name BN OAM; and a contact model file *fm-cn-touch.json* is scanned in terms of a scenario name CN OAM. The processes for other components are similar to that of the warning component, and will not be enumerated any further.

At step 604, a model analyzer scans the contact model files according to the scenario value, and transmits data of contact models in the contact model files obtained by scanning to the contact capability management.

At step 605, the contact capability management receives a model message, synthesizes, in terms of scenarios, all contact models meeting requirements into a collective contact model and makes it persistent, and synchronously activates the contact model lifecycle management. It can be seen in Fig. 5 that each model corresponds to a scenario, and after a step of corresponding each model to a scenario is completed, the following schematic converged model is formed.

| | |
|---|---|
| RAN OAM | fm-bn-touch.json |
| | ...... model files of other components that are scanned in terms of this scenario are not enumerated any further |
| BN OAM | fm-bn-touch.json |
| | ...... model files of other components that are scanned in terms of this scenario are not enumerated any further |
| CN OAM | fm-cn-touch.json |
| | ...... model files of other components that are scanned in terms of this scenario are not enumerated any further |

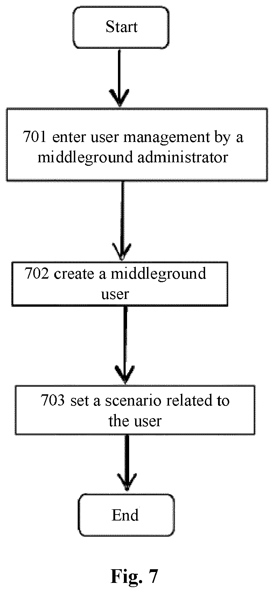

Fig. 7 shows a process of binding a middleground user with a scenario so that the user is provided with a scenario tag. The process includes the following steps.

At step 701, a system administrator enters the user management, and sets a usage scenario corresponding to a working responsibility of a user.

At step 702, a new user is created, or an existing user is modified. For example, User A with a post of wireless network operation and maintenance is created.

At step 703, a binding relationship between the user and the scenario is set; and a scenario tag of the User A is set as RAN OAM.

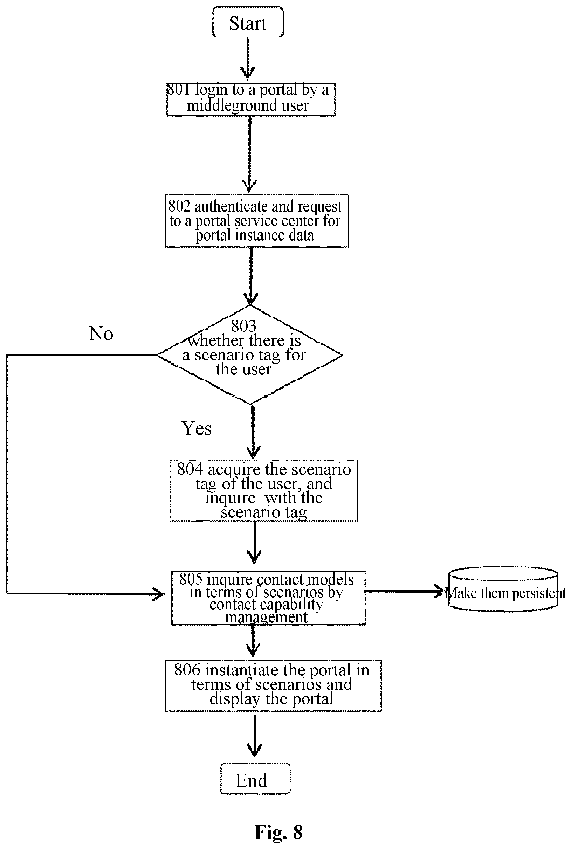

Fig. 8 shows a process of instantiating a portal that a user logins to.

At step 801, a middleground user, i.e., User A, logins to a portal.

At step 802, after authentication is completed, the User A requests to the portal service for portal instance data.

At step 803, a scenario tag of the user is automatically verified, and a scenario of the User A is RAN OAM.

At step 804, upon the user has a scenario tag, the scenario tag of the user is acquired as RAN OAM, then the contact capability management is inquired about contact models by using the tag RAN OAM, and contact models related to RAM OAM in above embodiment is returned.

At step 805, the contact capability management returns all data of contact models according to the scenario RAN OAM.

At step 806, the portal is instantiated according to the scenario RAN OAM, and service functions belonging to the User A are exhibited.

Although the present disclosure is described above in detail, the present disclosure is not limited to this, and those skilled in the art can make various modifications according to principles of embodiments of the present disclosure. Therefore, any modification made according to the principle of the present disclosure shall be understood as falling into the protection scope of the present disclosure.

### Industrial applicability

In embodiments of the present disclosure, each service component of a 5G intelligent operation and maintenance middleground constructs contact model files with respect to respective scenarios according to a contact model specification, and a contact capability management module stores the contact model files with respect to respective scenarios according to a specification that one scenario involves one directory. Then, after a contact model analyzer scans and analyzes contact model files that are matched according to a scenario value of a set scenario, the contact capability management module collects data of contact models from the matched contact model files and aggregates, in terms of scenarios, the data of contact models, so that a middleground portal is provided in terms of scenarios by binding a middleground user with a scenario. In this way, it is possible to rapidly construct foreground applications in a 5G intelligent operation and maintenance portal according to the scenarios and unify the portal address, so as to quickly adapt to display requirements of different end-users for the portal in a middleground architecture.

## Claims

1. A model-driven method for an intelligent operation and maintenance middleground portal, comprising steps of:
constructing, by each of service components (104) in an intelligent operation and maintenance middleground, contact model files with respect to respective scenarios according to a contact model specification (S101);
storing, by a contact capability management module (105), the contact model files with respect to respective scenarios according to a specification that one scenario involves one directory (S102); and
scanning and analyzing at a contact model analyzer (106), by the contact capability management module (105), contact model files that are matched according to a scenario value of a set scenario, collecting data of contact models from the contact model files that are matched, and aggregating, in terms of scenarios, the data of contact models, so as to provide a middleground portal in terms of scenarios by binding a middleground user with a scenario (S103).

2. The method according to claim 1, wherein the method further comprises a step of performing lifecycle management on the contact models after aggregating the collected data of contact models in terms of scenarios, which specifically comprises steps of:
forming, by the contact capability management module (105), contact models by aggregating, in terms of scenarios, the collected data of contact models; and
maintaining, by the contact capability management module (105), lifecycles of the contact models in real time according to lifecycles of respective service components in the intelligent operation and maintenance middleground.

3. The method according to claim 1 or claim 2, wherein each of the service components is an application program which provides a complete service with respect to a certain function and is deployed independently; the middleground portal provides a unified login entry, and a service function in the portal is formed by a series of contacts and is exhibited in terms of application scenarios; and each of the contacts is a function entry for a user in the middleground portal to operate.

4. The method according to claim 1 or claim 2, wherein each of the contact model files comprises: a contact ID, a contact name, a contact response *herf*, a contact connection relationship *parent ID,* and a sequence number *order.*

5. The method according to claim 1 or claim 2, wherein scanning and analyzing at a contact model analyzer contact model files that are matched according to a scenario value of a set scenario comprises steps of:
activating, by each of the service components, a contact model scanner upon monitoring a scenario notification carrying a scenario value and broadcasted by message middleware; and
scanning, by the contact model scanner, the contact model files according to the scenario value, and analyzing the contact model files that are matched so as to obtain corresponding data of contact models therefrom.

6. The method according to claim 1 or claim 2, wherein to provide a middleground portal in terms of scenarios by binding a middleground user with a scenario comprises steps of:
binding each middleground user with a related usage scenario according to a working responsibility of the middleground user and its related usage scenario;
acquiring, by a portal service module, data of contact models matching the scenario according to a binding relationship between the middleground user and the scenario when the user accesses the middleground portal; and
instantiating, by a portal service module after acquiring the data of contact models, contacts according to the contact models and displaying the contacts in the portal.

7. The method according to claim 1 or claim 2, wherein binding each middleground user with a related usage scenario comprises a step of setting a scenario tag of the related usage scenario for each middleground user.

8. The method according to claim 1 or claim 2, wherein acquiring, by a portal service module, data of contact models matching the scenario according to a binding relationship between the middleground user and the scenario when the user accesses the middleground portal comprises steps of:
inquiring, by the middleground user after logging into the middleground portal, the contact capability management module (105) about the contact models by using a scenario tag; and
instantiating, in terms of scenarios by the contact capability management module (105), a portal according to all data of contact models obtained by inquiring, and displaying service functions belonging to the middleground user.

9. A model-driven apparatus for an intelligent operation and maintenance middleground portal, comprising:
service components (104) of an intelligent operation and maintenance middleground, each of which is configured to construct contact model files with respect to respective scenarios according to a contact model specification;
a contact model analyzer (106), which is configured to scan and analyze, according to a scenario value of a set scenario, contact model files that are matched; and
a contact capability management module (105), which is configured to store the contact model files with respect to respective scenarios according to a specification that one scenario involves one directory, and is configured to collect, after the contact model analyzer (106) scans and analyzes the contact model files that are matched according to the scenario value of the set scenario, data of contact models from the matched contact model files and aggregate, in terms of scenarios, the collected data of contact models, so as to provide a middleground portal in terms of scenarios by binding a middleground user with a scenario.

10. The model-driven apparatus for an intelligent operation and maintenance middleground portal according to claim 9 further comprises:
a user management module, which is configured to bind a middleground user with a scenario; and
a portal service module, which is configured to acquire the data of contact models in response to a user login request, and perform instantiation according to description of the contact models so as to provide the middleground portal in terms of the scenario.
